(19) Europäisches Patentamt
European Patent Office
Office européen des brevets

(11) Veröffentlichungsnummer: **0 113 921**
**A2**

(12) # EUROPÄISCHE PATENTANMELDUNG

(21) Anmeldenummer: **83113226.1**

(22) Anmeldetag: **30.12.83**

(51) Int. Cl.³: **C 09 B 67/34**, C 09 B 23/16, D 21 H 3/80, D 06 P 1/41

(30) Priorität: **14.01.83 DE 3301026**

(43) Veröffentlichungstag der Anmeldung: **25.07.84 Patentblatt 84/30**

(84) Benannte Vertragsstaaten: **CH DE FR GB LI**

(71) Anmelder: **BAYER AG, Konzernverwaltung RP Patentabteilung, D-5090 Leverkusen 1 Bayerwerk (DE)**

(72) Erfinder: **Kühlthau, Hans-Peter, Dr., verstorben (DE)**
Erfinder: **Raue, Roderich, Dr., Berta-von-Suttner-Strasse 48, D-5090 Leverkusen 1 (DE)**

(54) **Verfahren zur Herstellung von stabilen Lösungen kationischer Methinfarbstoffe.**

(57) Die Herstellung stabiler, konzentrierter Lösungen kationischer Methinfarbstoffe der allgemeinen Formel

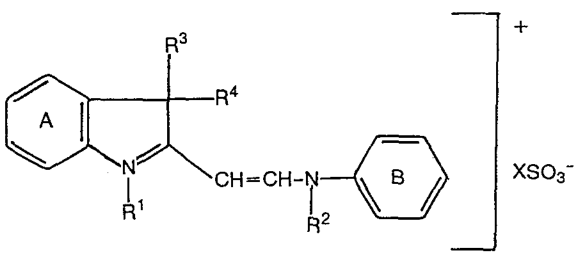

$XSO_3^-$ I,

worin
$R^1$ Alkyl, Alkenyl oder Aralkyl,
$R^2$ Wasserstoff, Alkyl, Alkenyl oder Aralkyl bedeuten, wobei $R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,
$R^3$ und $R^4$ für Methyl oder Ethyl,
X für Aryl, Alkyl mit 1 bis 4 C-Atomen oder Alkoxy mit 1 bis 4 C-Atomen stehen und worin
die Ringe A und B und die Reste $R^1$ und $R^2$ nichtionische Substituenten und die Ringe A und B weitere ankondensierte Ringe tragen können,
erfolgt durch Kondensation einer Verbindung der Formel

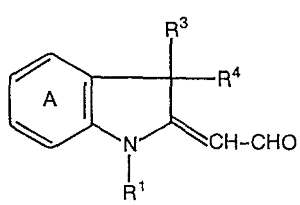

II,

mit Aminen der Formel

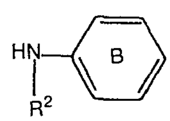

III,

1 bis 2 Äquivalenten einer Säure der Formel

$XSO_3H$ IV,

in Gegenwart organischer Lösungsmittel und von 0–10% Wasser.



ACTORUM AG

BAYER AKTIENGESELLSCHAFT 5090 Leverkusen, Bayerwerk

Zentralbereich
Patente, Marken und Lizenzen Mi/Kü-c

# Verfahren zur Herstellung von stabilen Lösungen kationischer Methinfarbstoffe

Gegenstand der Erfindung ist ein Verfahren zur Herstellung stabiler, konzentrierter Lösungen kationischer Methinfarbstoffe der allgemeinen Formel

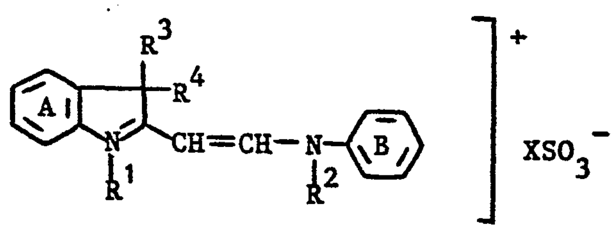

I,

worin

$R^1$ Alkyl, Alkenyl oder Aralkyl,

$R^2$ Wasserstoff, Alkyl, Alkenyl oder Aralkyl bedeuten, wobei

$R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,

$R^3$ und $R^4$ für Methyl oder Ethyl,

X für Aryl, Alkyl mit 1 bis 4 C-Atomen oder Alkoxy mit 1 bis 4 C-Atomen stehen und worin

die Ringe A und B und die Reste $R^1$ und $R^2$ nichtionische Substituenten und die Ringe A und B weitere ankondensierte Ringe tragen können,

durch Kondensation einer Verbindung der Formel

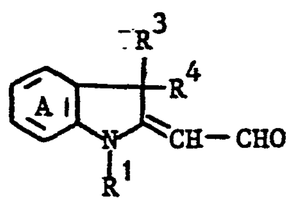

II,

worin

A, $R^1$, $R^3$ und $R^4$ die in Formel I angegebene Bedeutung haben,

mit Aminen der Formel

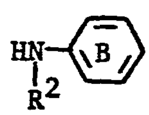

III,

worin

B und $R^2$ die in Formel I angegebene Bedeutung haben,

und Säuren, dadurch gekennzeichnet, daß man die Kondensation mit 1 bis 2 Äquivalenten einer Säure der Formel

$$XSO_3H \qquad IV,$$

in welcher

X die vorstehend angegebene Bedeutung hat,

in Gegenwart organischer Lösungsmittel und von 0 - 10 % Wasser durchführt. Der bevorzugte Wassergehalt liegt bei 0 - 2 %.

Als Säuren sind besonders diejenigen der Formel IV zu nennen, worin

X für einen gegebenenfalls durch 1 - 3 Alkylreste mit 1 - 4 C-Atomen, Alkoxyreste mit 1 - 4 C-Atomen, Halogen oder Hydroxyl substituierten Phenylrest, $C_1$- bis $C_4$-Alkyl oder $C_1$- bis $C_4$-Alkoxy steht.

Ganz besonders bevorzugt steht

X für Methyl oder Ethyl.

Eine bevorzugte Gruppe von Farbstoffen, die nach dem neuen Verfahren darstellbar ist, entspricht der allgemeinen Formel

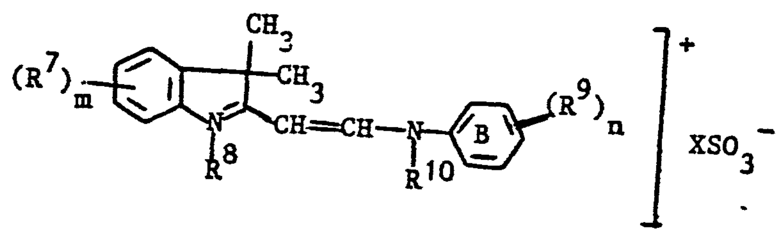

V,

worin

$R^7$ für Wasserstoff, Alkyl mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sufonamidgruppe, Alkylsulfonyl mit 1 bis 4 C-Atomen, Phenylsulfonyl, eine Cyan-, Trifluormethyl-, Acetyl- oder Benzoylgruppe,

$R^8$ für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen stehen,

$R^9$ die gleiche Bedeutung wie $R^7$ hat oder zusammen mit dem Benzolring B ein Tetralin-, Naphthalin-oder Benzdioxanringsystem bildet,

$R^{10}$ für Wasserstoff, Alkyl mit 1 - 4 C-Atomen, Alkylen mit 2 oder 3 C-Atomen, das mit der o-Stellung von

B verbunden ist und durch Alkyl mit 1 - 4 C-Atomen substituiert oder mit einem weiteren carbocyclischen Ring kondensiert sein kann,

X für die oben genannte Bedeutung und

m und n für 1 oder 2 stehen.

Von den Verbindungen der Formel V sind insbesondere solche zu nennen, worin

m für 1,

n für 1 oder 2

$R^7$ für Wasserstoff, Chlor, Methyl, Methoxy, Ethoxy, Benzyl, Phenoxy, Benzyloxy oder Carbomethoxy,

$R^8$ für Methyl,

$R^9$ für Wasserstoff, Methyl, Methoxy, Ethoxy, Benzyl, Benzyloxy, Phenoxy, Chlor, $C_1$- bis $C_2$-alkylsubstituiertes Carbonamid oder zusammen mit dem Ring B für ein Naphthalin-, Tetrahydronaphthalin- oder Benzdioxanringsystem,

$R^{10}$ für Wasserstoff, Alkyl mit 1 oder 2 C-Atomen, Alkylen mit 2 oder 3 C-Atomen, das mit der o-Stellung von B verbunden ist und durch 1 bis 3 $C_1$- bis $C_2$-Alkylgruppen substituiert oder mit einem Cyclohexanring kondensiert sein kann, stehen, und

X die gleiche Bedeutung wie in Formel I hat.

Insbesondere werden äquimolare Mengen der Verbindungen II und III umgesetzt.

Unter nichtionischen Substituenten sind im Sinne der vorliegenden Erfindung die in der Farbstoffchemie üblichen und unter gebräuchlichen Herstellungs- und Verwendungsbedingungen nicht dissoziierenden Substituenten zu verstehen, wie Halogen, z.B. Fluor, Chlor, Brom, Hydroxy, Alkyl, Alkenyl, Aryl, Aralkyl, Aryloxy, Alkoxy oder Hydroxyalkoxy, Cycloalkoxy, Aralkoxy, Aryloxyalkoxy, Alkylthio, Aralkylthio, Arylthio, Nitro, Cyan, Formyl, Alkylcarbonyl, Arylcarbonyloxy, Alkylcarbonyloxy, Alkoxycarbonyloxy, Alkylcarbonylamino, Alkylaminocarbonyloxy, Arylcarbonyl, Aralkylcarbonyl, Arylsulfonylamino, Aralkylsulfonylamino, Alkylsulfonylamino, Ureido, N-Alkyl-ureido, Aryloxycarbonylamino, Alkoxycarbonylamino, Carbamoyl, N-Alkyl-Carbamoyl, N,N-Dialkyl-carbamoyl, N-Alkyl-N-arylcarbamoyl, Sulfamoyl, N-Alkylsulfamoyl, N,N-Dialkyl-sulfamoyl, Alkylsulfonyl, Alkenylsulfonyl, Arylsulfonyl, Aralkylsulfonyl, Aryloxysulfonyl, Aryloxycarbonyl, Alkoxycarbonyl, Aralkoxycarbonyl, Mono-, Di- oder Trialkylsulfamidin,

Alkylarylsulfamidin, Alkylcycloalkylsulfamidin und Arylazo, Auch Polyglykoletherreste mit Halogen-, Hydroxy- oder Alkoxysubstituenten sind geeignet.

In den Formeln - soweit nicht speziell angegeben - und in den vorstehend genannten nichtionischen Substituenten sind unter Alkylresten insbesondere $C_1$- bis $C_8$-Alkylreste und unter Alkenylresten insbesondere $C_3$- bis $C_5$-Alkenylreste zu verstehen.

Geeignete Arylreste sind insbesondere der Phenyl- oder Naphthylrest.

Geeignete Aralkylreste sind insbesondere der Benzyl-, α- oder β-Phenylethyl-, α-, β- oder γ-Phenylpropylrest.

Unter Cycloalkyl wird vorzugsweise Cyclohexyl verstanden.

Durch Ankondensieren weiterer Ringe an die Ringe A und B entstehen beispielsweise Naphthalin-, Tetralin- und Benzdioxansysteme.

Unter Acyl wird beispielsweise Acetyl, Propionyl, Benzoyl und Carbamoyl verstanden.

Die aliphatischen und isocyclischen Reste können ihrerseits die vorstehend genannten nichtionischen Substituenten tragen.

Der Vorteil des neuen Verfahrens besteht darin, daß man - ohne eine wäßrige Phase zu durchlaufen, aus der der Farbstoff durch Aussalzen, Abfiltrieren und Trocknen isoliert werden und ohne daß der so isolierte Farbstoff wieder zu einer Flüssigeinstellung gelöst werden muß - unmittelbar zur verkaufsfertigen Farbstoff-Flüssigeinstellung gelangt. Bei dem neuen Verfahren fällt daher kein Abwasser an, und das arbeits- und energieaufwendige Trocknen des aus der Lösung isolierten Farbstoffes entfällt.

Ein besonderer Vorteil des neuen Verfahrens ist die ausgezeichnete Stabilität der erfindungsgemäß hergestellten Flüssigeinstellungen gegen Temperaturschwankungen. Dies ist besonders wichtig, weil beim Transport der Lösungen sowohl bei Temperaturen um 0°C kein Niederschlag ausfallen als auch unter Tropenbedingungen bei Temperaturen um 40°C keine Farbtonverschiebung durch Bildung roter gefärbter Verunreinigungen auftreten darf.

Man verwendet vorzugsweise mit Wasser mischbare Lösungsmittel.

Es werden Farbstofflösungen erhalten, die sehr konzentriert an Farbsalzen der Formel I sind, beispielsweise enthalten sie 10 bis 70 %, vorzugsweise bis 50 %, Farbstoff.

Für das Verfahren geeignete Zwischenprodukte der Formel II sind beispielsweise:

1,3,3-Trimethyl-2-methylen-indolin-ω-aldehyd, 1,3,3,5-Tetramethyl-2-methylen-indolin-ω-aldehyd, 1,3,3-Trimethyl-5-chlor-2-methylen-indolin-ω-aldehyd, 1,3,3-Trimethyl-5-methoxy-2-methylen-indolin-ω-aldehyd, 1,3,3-Trimethyl-5-carboethoxy-2-methylen-indolin-ω-aldehyd, 1,3,3-Trimethyl-5-methylsulfonyl-2-methylen-indolin-ω-aldehyd, 1,3,3-Trimethyl-5-benzyl-2-methylen-indolin-ω-aldehyd, 1,3,3-Trimethyl-5-benzyloxy-2-methyl-indolin-ω-aldehyd, 1,3,3-Trimethyl-5-(4-chlor-phenoxy)-2-methylen-indolin-ω-aldehyd, 1,3,3-Trimethyl-7-methoxy-2-methylen-indolin-ω-aldehyd, 1,3,3-Trimethyl-5-chlor-7-methoxy-2-methylen-indolin-ω-aldehyd, 1,3,3-Trimethyl-5,7-dimethoxy-2-methylen-indolin-ω-aldehyd, 1,3,3-Trimethyl-7-phenoxy-2-methylen-indolin-ω-aldehyd.

Geeignete Zwischenprodukte der Formel III sind beispielsweise:

4-Amino-diphenylether, 4-Amino-4'-methyl-diphenylether, 4-Amino-4'-ethyl-diphenylether, 4-Amino-4'-tert.-butyl-diphenylether, 4-Amino-4'-cyclohexyl-diphenylether, 4-Amino-2'-methyl-diphenylether, 4-Amino-3'-methyl-diphenylether, 4-Amino-4'-methoxy-diphenylether, 4-Amino-3'-methoxy-diphenylether, 4-Amino-4'-ethoxy-diphenylether, 4-Amino-4'-acetylamino-diphenylether, 4-Amino-4'-hydroxy-diphenylether, 4-Amino-4'-nitro-diphenylether, 4-Amino-4'-chlor-diphenylether, 4-Amino-2'-chlor-diphenylether, 4-Amino-3'-chlor-diphenylether, 4-Amino-phenyl-α-naphthylether, 4-Aminophenyl-ßnaphthylether, 4-Amino-2',3',5'-trimethyl-diphenylether,

4-Amino-phenyl-benzylether, 3-Aminophenyl-benzylether, 2-Aminophenyl-benzylether, 2-Amino-diphenylether, 4-Aminophenyl-4'-methylbenzylether, 4-Aminophenyl-4'-chlorbenzylether, 4-Aminophenyl-2'-chlorbenzylether, 4-Aminophenyl-3',4'-dichlorbenzylether, 4-Aminobenzyl-2',4',5'-trichlorbenzylether, 3-Aminophenyl-4'-methyl-benzylether, 3-Aminophenyl-4'-chlorbenzylether, 3-Aminophenyl-2'-chlorbenzylether, 3-Amino-phenyl-3',4'-dichlorbenzylether, 3-Aminophenyl-2',4',5'-trichlorbenzylether, 2-Aminophenyl-4'-methylbenzylether, 2-Aminophenyl-4'-chlorbenzylether, 2-Aminophenyl-3',4'-dichlorbenzylether, 2-Aminophenyl-2',4',5'-trichlorbenzylether, 4-Amino-2-methylphenyl-benzylether, 5-Amino-2-methyl-phenyl-benzylether, 2-Amino-5-methyl-phenyl-benzylether, 4-Amino-2-methoxy-phenyl-benzylether, 4-Amino-3-methoxy-phenyl-benzylether, 4-Amino-3-methyl-phenyl-benzylether, 4-Amino-3-chlor-phenyl-benzylether, 4-Amino-2-chlor-phenyl-benzylether, 4-Amino-2-methyl-phenyl-4'-methylbenzylether, 5-Amino-2-methyl-phenyl-3',4'-dichlorbenzylether, 2-Amino-5-methyl-phenyl-4'-chlorbenzylether, 4-Amino-2-methoxyphenyl-4'-methyl-benzylether, 4-Amino-3-methyl-phenyl-2',4',5'-trichlorbenzylether, Anilin, p-Toluidin, m-Toluidin, o-Anisidin, m-Anisidin, p-Anisidin, o-Phenetidin, p-Phenetidin, 4-Dodecyloxy-anilin, 4-Amino-acetanilid, N-Benzoyl-p-phenylendiamin, 2,4-Dimethoxy-anilin, 2,5-Dimethoxy-anilin, 3,4-Dimethoxy-anilin, 2-Chlor-4-amino-anisol, 2,4,5-Trimethyl-anilin, 2,3,5-Trimethyl-anilin, 5-Amino-2-acetylaminoanisol, 6-Amino-3-methoxy-

toluol, 3,4-Dicyan-anilin, p-Sulfanilsäureamid, 4-Aminobenzamid, 4-Chlor-anilin, 4-Fluor-anilin, 1,2,3,4-Tetra-hydro-5-amino-naphthalin, 4-Amino-2,5-diethoxy-benzoe-säureanilid, 4-Amino-2-methyl-5-methoxy-benzanilid, 4-Cyclohexyl-anilin, 2,4-Diethoxy-anilin, 1-Amino-naphthalin, 2-Methyl-2,3-dihydro-indol, Hexahydrocarbazol, 2,3,3-Trimethyl-2,3-dihydro-indol, 2,3,3-Trimethyl-5-methoxy-2,3-dihydro-indol, 4-Amino-brenzcatechinethylenether, 6-Amino-benzdioxan, 1,2,3,4-Tetrahydro-6-methoxy-chinolin, 4-Methylamino-phenyl-benzylether, 4-Ethylamino-phenylbenzylether.

Geeignete Säuren der Formel IV sind beispielsweise:

Benzolsulfonsäure, 2-Methyl-benzolsulfonsäure, 4-Methyl-benzolsulfonsäure, 2,4-Dimethylbenzolsulfonsäure, 2-Chlor-benzolsulfonsäure, 4-Chlor-benzolsulfonsäure, 2,4-Dichlor-benzolsulfonsäure, 4-Hydroxybenzolsulfonsäure, 4-Methoxybenzolsulfonsäure, Naphthalin-1-sulfonsäure, Naphthalin-2-sulfonsäure, Methansulfonsäure, Ethansulfonsäure, Butansulfonsäure, Methylschwefelsäure, Ethylschwefelsäure oder deren Gemische.

Geeignete Lösungsmittel sind beispielsweise:

Propanol, Ethylenglykol, Propylenglykol, Methylglykol, Ethylglykol, Butylglykol, Methylglykolacetat, Ethyl-glykolacetat, Butylglykolacetat, Ethylenglykoldi-acetat, Glycerinmonoacetat, Glycerintriacetat, Ethylen-

glykoldimethylether, Ethylenglykoldiethylether, Diethylenglykoldimethylether, Diethylenglykoldiethylether, Glycerindiacetat, Methyldiethylenglykolacetat, Diethylenglykoldiacetat, Ethylenglykol-dimethyl- und -diethylether, Triethylenglykoldimethyl- und -diethylether, Glycerin-1,3-diethylether, Butylenglykol(1,4) und Hexylenglykol (1,6), Acetonitril, Propionitril, Butyronitril, Methoxy- und Ethoxyessigsäurenitril, ß-Hydroxy, ß-Methoxy, ß-Ethoxy, ß-Hydroxyethoxy-, ß-Ethoxy-ethoxy-, ß-Propoxy- oder ß-Butoxy-propionitril, $C_1$- bis $C_4$-Alkyl-mono- oder -diketone, wie Aceton, Methylethylketon oder Acetylaceton, Dimethyl- und Diethylformamid, 5- oder 6-gliedrige Lactame, z.B. N-Methylpyrrolidon oder 5-gliedrige Sulfone sowie niedere aliphatische Monocarbonsäuren, wie Essigsäure, Milchsäure und Glykolsäure.

Auch ein Verdünnen mit Wasser nach der Kondensation ist möglich.

Die Reaktion wird bei Temperaturen zwischen 0°C und 100°C durchgeführt, bevorzugt ist der Temperaturbereich von 5 bis 60°C.

Die erfindungsgemäß hergestellten Farbstofflösungen sind geeignet zum Färben von tannierter Baumwolle, sauer

modifizierten Polyamid- und Polyesterfasern, insbesondere aber zum Färben von Fasermaterialien aus Polyacrylnitril. Weiter sind sie geeignet zum Färben von holzschliffhaltigem Papier und Leder.

Gegenstand der Erfindung sind auch kationische Methinfarbstoffe der Formel

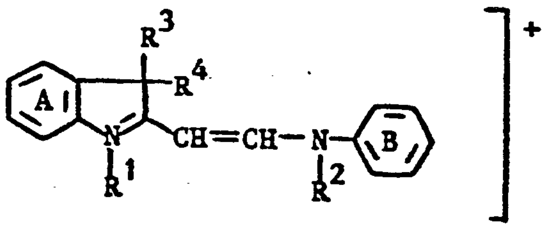 $CH_3-SO_3^-$ VI

worin

$R^1$-$R^4$, A und B die bei Formel I angegebene Bedeutung haben.

Beispiel 1

50,2 g 1,3,3-Trimethyl-2-methylen-indolin-ω-aldehyd und 47,8 g 2,3,3-Trimethyl-5-methoxy-indolin werden in 100 g Hydroxypropionitril verrührt und dann bei 15°C binnen 2 h tropfenweise mit 24 g Methansulfonsäure versetzt. Man rührt über Nacht bei Raumtemperatur und erhält eine von Rückstand freie, sofort gebrauchsfertige Lösung des Farbstoffes der Formel

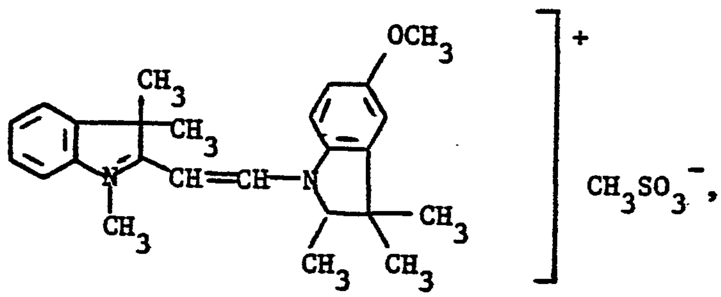

die Polyacrylnitril grünstichig gelb färbt.

Wertvolle Flüssigeinstellungen von Farbstoffen, die Polyacrylnitril grünstichig gelb färben, erhält man auch, wenn man Trimethyl-5-methoxy-indolin durch Hexahydrocarbazol, 6-Methoxy-tetrahydrochinolin oder 2-Methyl-5-methoxy-indolin ersetzt und nach der vorstehend angegebenen Vorschrift arbeitet.

Beispiel 2

50,2 g 1,3,3-Trimethyl-2-methylen-indolin-ω-aldehyd und 33,5 g 2-Methyl-indolin werden in 75 g Propylenglykol und 25 g Hydroxypropionitril verrührt und dann bei

0113921

20°C binnen 2 h unter gelindem Kühlen tropfenweise mit 24 g Methansulfonsäure versetzt. Nach dem Nachrühren bei Raumtemperatur über Nacht erhält man eine stabile, hochkonzentrierte, sofort gebrauchsfertige Lösung des Farbstoffes der Formel

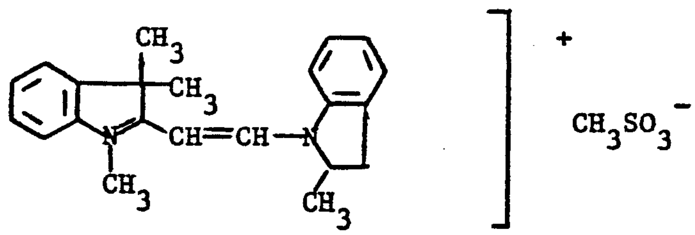

die etwa die doppelte Farbstärke einer vergleichbaren Flüssigeinstellung des Handels hat.

Der Farbstoff färbt sauer modifizierte Synthesefasern grünstichig gelb.

Flüssigeinstellungen interessanter grünstichig gelber Farbstoffe werden auch erhalten, wenn man statt 1,3,3-Trimethyl-2-methylen-ω-aldehyd nach vorstehend beschriebener Arbeitsweise folgende Aldehyde umsetzt:

1,3,3-Trimethyl-2-methylen-5-benzyloxy-indolin-ω-aldehyd, 1,3,3-Trimethyl-2-methylen-5-chlor-indolin- -aldehyd, 1,3,3,5-Tetramethyl-2-methylen-indolin-ω-aldehyd, 1,3,3-Trimethyl-2-methylen-5-carbomethoxy-indolin-ω-aldehyd, 1,3,3-Trimethyl-2-methylen-5-methoxy-indolin-ω-aldehyd.

Beispiel 3

50,2 g 1,3,3-Trimethyl-2-methylen-indolin-ω-aldehyd und 47,8 g 2,3,3-Trimethyl-5-methoxy-indolin werden in 100 g Hydroxypropionitril verrührt und dann bei 15°C langsam mit 43 g p-Toluolsulfonsäure versetzt.

Man rührt bei Raumtemperatur über Nacht nach und erhält eine gebrauchsfertige Lösung des Farbstoffes der Formel

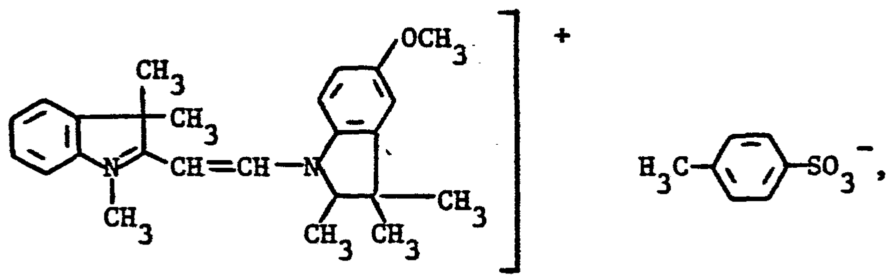

welche Polyacrylnitril grünstichig gelb färbt.

Beispiel 4

50,2 g 1,3,3-Trimethyl-2-methylen-indolin- ω-aldehyd und 31 g p-Anisidin werden in 109 g Hydroxypropionitril verrührt. Dann tropft man unter gelindem Kühlen bei 20°C binnen 2 h 24 g Methansulfonsäure ein und rührt dann bei Raumtemperatur über Nacht. Man erhält eine hochkonzentrierte, sofort gebrauchsfertige Lösung des Farbstoffes der Formel

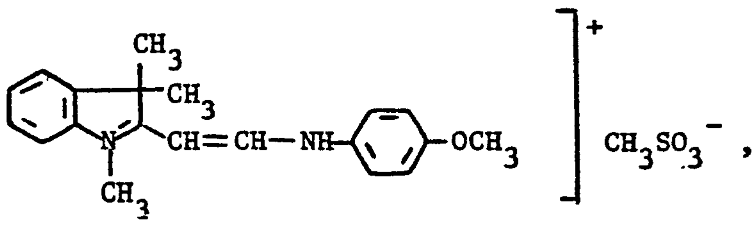

die Polyacrylnitril grünstichig gelb färbt.

Patentansprüche

1. Verfahren zur Herstellung stabiler, konzentrierter Lösungen kationischer Methinfarbstoffe der allgemeinen Formel

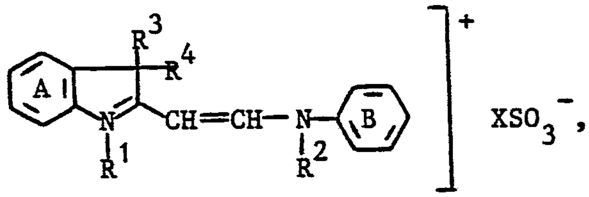

worin

$R^1$ Alkyl, Alkenyl oder Aralkyl,

$R^2$ Wasserstoff, Alkyl, Alkenyl oder Aralkyl bedeuten, wobei

$R^2$ gegebenenfalls einen 5- oder 6-gliedrigen Ring zur benachbarten Stellung des Arylringes B schließen kann, wobei dieser dabei gebildete heterocyclische 5- oder 6-gliedrige Ring gegebenenfalls alkylsubstituiert oder mit einem weiteren carbocyclischen Ring kondensiert sein kann,

$R^3$ und $R^4$ für Methyl oder Ethyl,

X für Aryl, Alkyl mit 1 bis 4 C-Atomen oder Alkoxy mit 1 bis 4 C-Atomen stehen und worin

die Ringe A und B und die Reste $R^1$ und $R^2$ nicht-ionische Substituenten und die Ringe A und B weitere ankondensierte Ringe tragen können,

durch Kondensation einer Verbindung der Formel

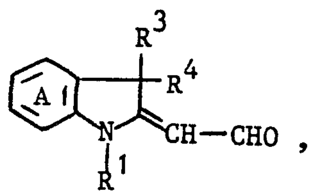

worin

A, $R^1$, $R^3$ und $R^4$ die vorstehend angegebene Bedeutung haben,

mit Aminen der Formel

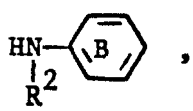

worin

B und $R^2$ die vorstehend angegebene Bedeutung haben,

und Säuren, dadurch gekennzeichnet, daß man die Kondensation mit 1 bis 2 Äquivalenten einer Säure der Formel

$XSO_3H$,

in welcher

X die vorstehend angegebene Bedeutung hat,

in Gegenwart organischer Lösungsmittel und von 0 bis 10 % Wasser - bezogen auf das Gesamtgewicht der beiden Ausgangskomponenten - durchführt.

2. Verfahren nach Anspruch 1, dadurch gekennzeichnet, daß man Verbindungen der allgemeinen Formel

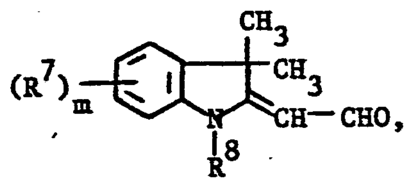

worin

$R^7$ für Wasserstoff, Alkyl mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

$R^8$ für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen und

m für 1 oder 2 stehen,

mit Verbindungen der allgemeinen Formel

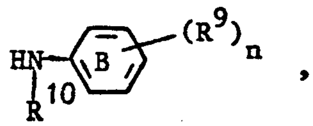

worin

$R^9$ die gleiche Bedeutung wie $R^7$ hat oder zusammen mit dem Benzolring B ein Tetralin-, Naphthalin- oder Benzdioxanringsystem bildet,

$R^{10}$ für Wasserstoff, Alkyl mit 1 - 4 C-Atomen, Alkylen mit 2 oder 3 C-Atomen, das mit der o-Stellung von B verbunden ist und durch Alkyl mit 1 - 4 C-Atomen substituiert oder mit einem weiteren carbocyclischen Ring kondensiert sein kann,

n für 1 oder 2 steht,

zu Verbindungen der allgemeinen Formel

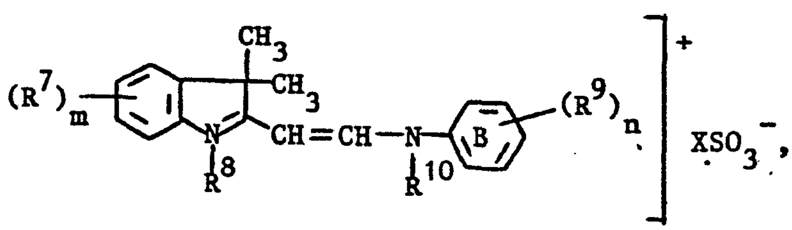

worin

$R^7$, $R^8$, $R^9$, $R^{10}$, n und m die vorstehend genannte Bedeutung haben und

X die in Anspruch 1 angegebene Bedeutung besitzt,

umsetzt.

3. Verfahren gemäß Anspruch 2, dadurch gekennzeichnet, daß

m für 1,

n für 1 oder 2,

$R^7$ für Wasserstoff, Chlor, Methyl, Methoxy, Ethoxy, Benzyl, Phenoxy, Benzyloxy oder Carbomethoxy,

$R^8$ für Methyl,

$R^9$ für Wasserstoff, Methyl, Methoxy, Ethoxy, Benzyl, Benzyloxy, Phenoxy, Chlor, $C_1$- bis $C_2$-alkylsubstituiertes Carbonamid oder zusammen mit dem Ring B für ein Naphthalin-, Tetrahydronaphthalin- oder Benzdioxanringsystem,

$R^{10}$ für Wasserstoff, Alkyl mit 1 oder 2 C-Atomen, Alkylen mit 2 oder 3 C-Atomen, das mit der o-Stellung von B verbunden ist und durch 1 bis 3 $C_1$- bis $C_2$-Alkylgruppen substituiert oder mit einem Cyclohexanring kondensiert sein kann, stehen und

X die gleiche Bedeutung wie in Anspruch 1 hat.

4. Verfahren gemäß Anspruch 1, dadurch gekennzeichnet, daß

X für einen gegebenenfalls durch 1 bis 3 Alkylreste mit 1 bis 4 C-Atomen, Alkoxyreste mit 1 bis 4 C-Atomen, Halogen oder Hydroxy substituierten Phenylrest, $C_1$-bis $C_4$-Alkyl oder $C_1$- bis $C_4$-Alkoxy steht.

5. Verfahren gemäß Anspruch 1, dadurch gekennzeichnet, daß

X für Methyl oder Ethyl steht.

6. Verfahren gemäß Anspruch 1, dadurch gekennzeichnet, daß man mit Wasser mischbares organisches Lösungsmittel zusetzt, um unmittelbar zu einer stabilen, konzentrierten Flüssigeinstellung des Farbstoffes mit einem Farbstoffgehalt von 10 bis 70 %, vorzugsweise bis 50 %, zu gelangen.

7. Verfahren gemäß Anspruch 3, dadurch gekennzeichnet, daß

$R^{10}$ für Alkylen mit 2 oder 3 C-Atomen steht, das mit der o-Stellung verbunden ist und durch 1 bis 3 $C_1$- bis $C_2$-Alkylgruppen substituiert oder mit einem Cyclohexanring kondensiert sein kann und

X für Methyl steht.

8. Verwendung der nach Anspruch 1 hergestellten Farbstofflösungen zum Färben von tannierter Baumwolle, Polyacrylnitril, sauer modifizierten Polyamid- und Polyesterfasern, von holzschliffhaltigem Papier und Leder.

9. Kationische Methinfarbstoffe der allgemeinen Formel

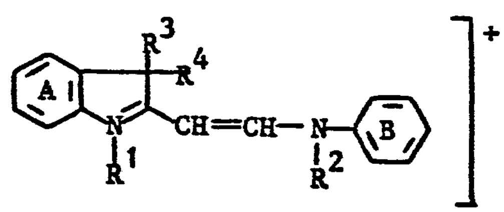

$CH_3-SO_3^-$

worin
$R^1$ Alkyl, Alkenyl oder Aralkyl,
$R^2$ Wasserstoff, Alkyl, Alkenyl oder Aralkyl bedeuten, wobei
$R^2$ gegebenenfalls einen 5- oder 6-gliedrigen Ring zur benachbarten Stellung des Arylringes B schließen kann, wobei dieser dabei gebildete heterocyclische 5- oder 6-gliedrige

Ring gegebenenfalls alkylsubstituiert oder mit einem weiteren carbocyclischen Ring kondensiert sein kann, und

$R^3$ und $R^4$ für Methyl oder Ethyl stehen, und worin die Ringe A und B und die Reste $R^1$ und $R^2$ nicht-ionische Substituenten und die Ringe A und B weitere ankondensierte Ringe tragen können.